# EUROPEAN PATENT SPECIFICATION

(11) **EP 3 327 886 B1**
(45) Date of publication and mention of the grant of the patent: **28.10.2026**
(21) Application number: 17201176.9
(22) Date of filing: 10.11.2017
(51) Int. Cl.: H02H 3/02, H02H 3/08

(54) **SYSTEM AND METHOD FOR PROTECTING A SOLID-STATE POWER CONTROLLER**
SYSTEM UND VERFAHREN ZUM SCHUTZ EINES RÖHRENLOSEN LEISTUNGSREGLERS
SYSTÈME ET PROCÉDÉ DE PROTECTION D'UN CONTRÔLEUR DE PUISSANCE À SEMI-CONDUCTEURS

(30) Priority: 18.11.2016 GB 201619504
(43) Date of publication of application: 30.05.2018
(73) Proprietor: GE Aviation Systems Limited, Bishops Cleeve Cheltenham Gloucestershire GL52 8SF (GB)
(72) Inventor: HANDY, Peter James, Cheltenham, Gloucestershire GL52 8SF (GB); GLENNY, Michael, Cheltenham, Gloucestershire GL52 8SF (GB)
(74) Representative: Openshaw & Co.

(56) References cited:
- EP-A1- 0 148 370
- EP-A2- 2 017 934
- US-A- 4 618 906
- US-A1- 2005 146 824
- US-A1- 2014 035 359

## Description

### BACKGROUND OF THE INVENTION

An electrical power distribution system can contain one or more distribution units deployed throughout an aircraft or ground-based system for distributing power from a source to a number of loads. One or more solid state power controllers (SSPC) stacked within each distribution unit can be configured to switch off power to the load wiring loading each SSPC, such as when a load current exceeds a trip protection limit of the SSPC for a certain amount of time. A failure in the SSPC, such as when a solid state switch of the SSPC fails in a closed position, can prevent the SSPC from cutting power to the load during an overcurrent event, leading to undesirable results.

One effective solution to the above shortcomings can be to add a secondary switch at an output of the SSPC to cut power to the load when a failure in the SSPC is detected, or when the load experiences an overcurrent event and the SSPC has not responded. However, a catastrophic failure in the SSPC itself can result in malfunction, overheating, or arcing within the SSPC, particularly in the solid state switch, whether or not the secondary switch has cut power to the load, and which can result in damage to other SSPCs or to the entire distribution unit.

Alternatively, the solid state switch in the SSPC could be replaced with an electromechanical switch to avoid the malfunction, overheating, or arcing that could occur in the solid state switch. But this approach would reintroduce the reliability problems and higher costs associated with the electromechanical technologies which preceded the solid state switch.

US2005/146824A1 and EP2017934A2 disclose a solid state electrical power distribution system for distributing electricity from a source of electricity to a load by way of at least one solid state power controller having an input coupled to the source and an output coupled to the load.

### SUMMARY OF THE INVENTION

In one aspect, there is disclosed a solid state electrical power distribution system as claimed in claim 1.

In another aspect, there is disclosed a method as claimed in claim 6.

### BRIEF DESCRIPTION OF THE DRAWINGS

FIG. 1 illustrates a prior art solution providing overcurrent protection to load wiring.
FIG. 2 illustrates a prior art solution providing a secondary protection to the load wiring of FIG. 1.
FIG. 3 illustrates a schematic of a system protecting a solid state power controller using a shunt switch, in accordance with the invention.
FIG. 4 illustrates a schematic of the protection system of FIG. 3 with a monitoring resistor, in accordance with the invention.
FIG. 5 illustrates a plot of a current-time characteristic of a fuse of FIGS. 3 and 4, in accordance with the invention.
FIG. 6 illustrates a protection logic of FIGS. 3 and 4, in accordance with the invention.

### DETAILED DESCRIPTION

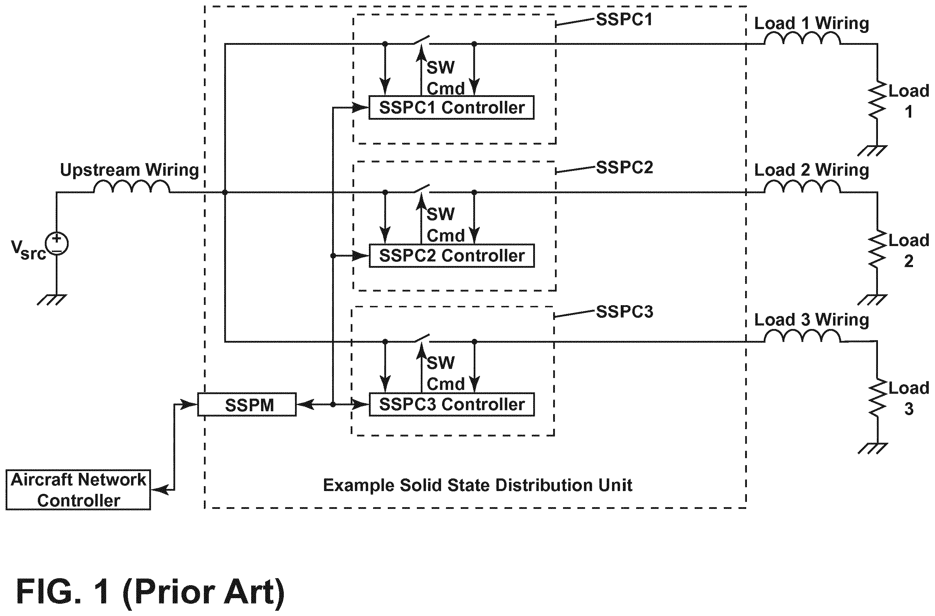

FIG. 1 depicts a prior art solution where a distribution unit can contain three solid state power controllers (SSPC) switching a source through upstream wiring to independent loads each fed by a load wiring. A series switch in each SSPC can be switched open or closed by a switch command from an SSPC control circuit, where each series switch can be a MOSFET or other solid state device. Each SSPC can be remotely controlled from an aircraft network controller. A solid state power management unit (SSPM) can coordinate a centralized control for each distribution unit.

The solid state series switch can have better reliability than an electromechanical circuit breaker by eliminating contact wear and sticking, and by providing customized trip protection to more accurately protect the load and the load wiring. An SSPC load can draw as much as 100 amperes or greater. The SSPC can be designed to provide a trip characteristic following a current-time protection curve that opens the switch when there is a failure in the load wiring or load, or when an overcurrent load condition exists. The SSPC can also be designed to trip instantly at a particular output current condition or when other signal conditions exist such as an irregularity in the input source signal. The SSPC can fail, although infrequently, posing a threat to the safe operation of the SSPC and associated loads. The failure can be catastrophic, meaning there can be damage, overheating, or arcing within the SSPC and particularly within the solid state switching device.

For example, the load can have capacitive or inductive aspects, which can generate high inrush currents or high kickback voltages that can damage the solid state switch. To protect against failure, a soft turn-on can be used to mitigate the inrush currents caused by a capacitive load, and transient suppressors can absorb kickback voltages caused by inductive loads. However, various conditions of source, load, mechanical shock, temperature or extreme capacitive and inductive transients can still cause the solid state switch to fail, leading to a permanently closed condition, arcing, overheating, or other malfunctioning in the SSPC and an inability to cut power to the load wiring.

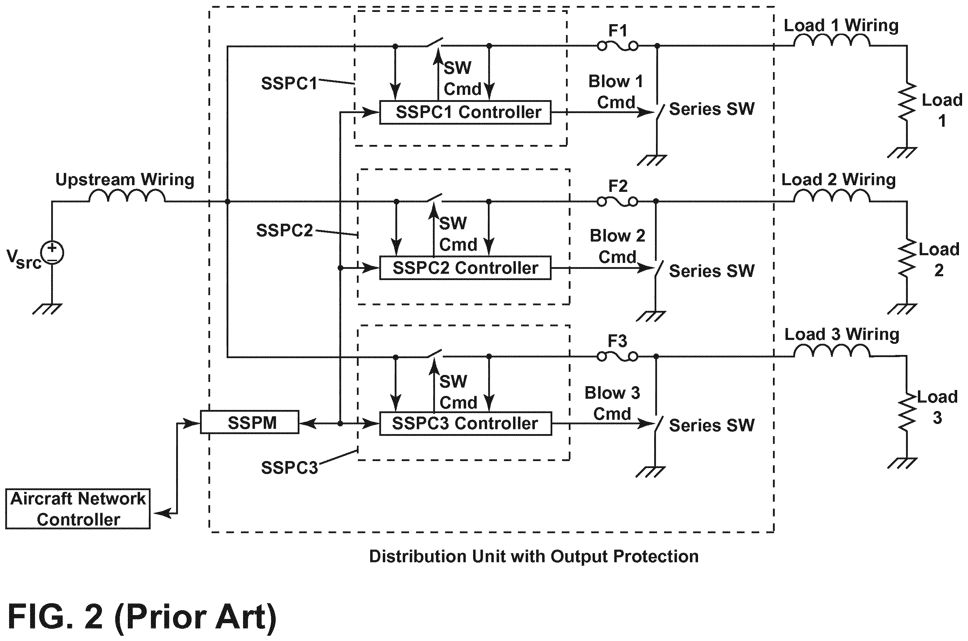

In the prior art solution of FIG. 2, an output fuse (F1, F2, F3) can be placed in series with an output of the SSPC with a switch across the load wiring as shown. The control circuit can be configured to close the relay when a failure is detected and thereby blow the hard fuse to provide a secondary power cut to the load and the load wiring.

However, activating the output fuse cannot protect the SSPC should the SSPC experience a catastrophic failure resulting in malfunction, overheating, or arcing. Additionally, a trip protection limit of the SSPC may prevent the fuse from receiving enough current to melt a physical element of the output fuse in the event the relay is closed, leaving the load wiring without an effective secondary protection system. Also, the solid state switch can fail with a moderate impedance such as to restrict fuse current to lie below a current-time blow characteristic of the output fuse such that the fuse cannot be blown.

As may be appreciated, there exists a need in the art for a secondary protection for the load wiring in the event of a failure in the SSPC or an overcurrent event in the load wiring. Additionally, there exists a need in the art to also protect the SSPC and the distribution unit from catastrophic failure, most notably, where damage, overheating, or arcing occurs within a solid state switch device of the SSPC. Also, there exists a need in the art for a diversified, reliable, and low cost secondary protection depending on a technology dissimilar from the solid state switch.

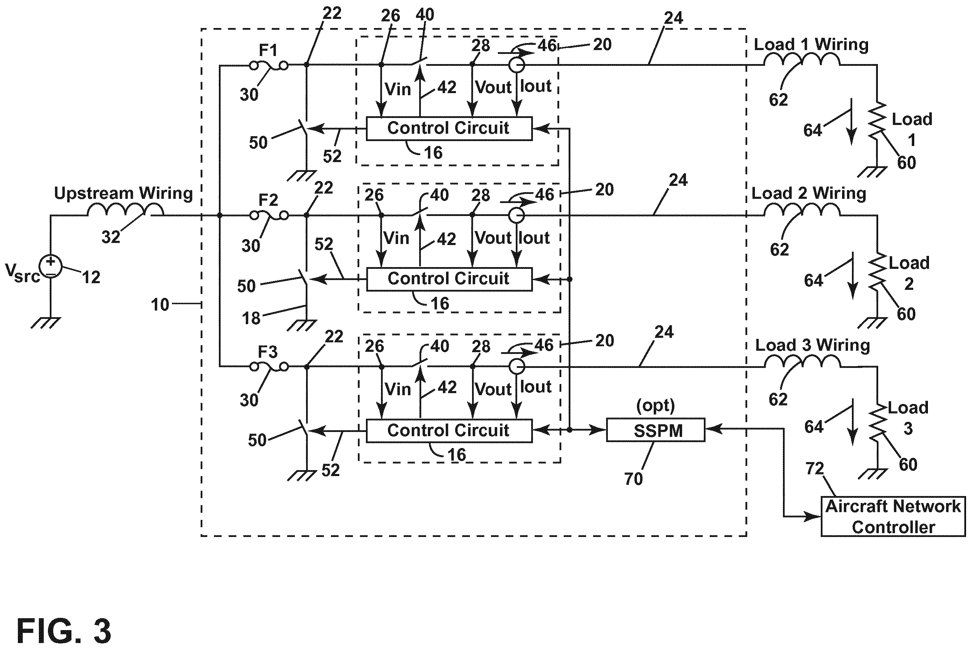

Referring now to FIG. 3, according to the invention, a solid state electrical power distribution unit 10 can be configured to distribute electricity from a source 12 to a load 60 and can contain at least one solid state power controller (SSPC) 20. In this example, the distribution unit 10 can contain three SSPCs 20 which can be stacked in a frame or rack (not shown); but any number of SSPCs can be contained in distribution unit 10. The SSPCs 20 in a distribution unit 10 can be centrally controlled through an aircraft network controller 72 and optional solid state power manager (SSPM) 70. The SSPC 20 can have an input 22 coupled to the source 12 through an threshold of the particular SSPC can be dynamically adjusted to better anticipate a failure.

Beneficially, the protection system of the present invention can galvanically isolate one or more SSPCs 20 from the source 12 and thereby quench an arcing process occurring between the SSPC input 22 and the output 24, or occurring between the input 22 and the chassis (ground) 18. Blowing the fuse 30 can thus prevent overheating or fire in the SSPC 20 or in the distribution unit 10 housing the SSPCs 20, whereas the prior art's breaking a path between the output 24 and the load wiring 62 cannot generally quench the arcing. Furthermore, the protection system can protect the load wiring 62 when the SSPC 20 is disabled by cutting power to the load wiring 62 and the SSPC 20, which can prevent an electrical fire in an aircraft or a ground-based power distribution system.

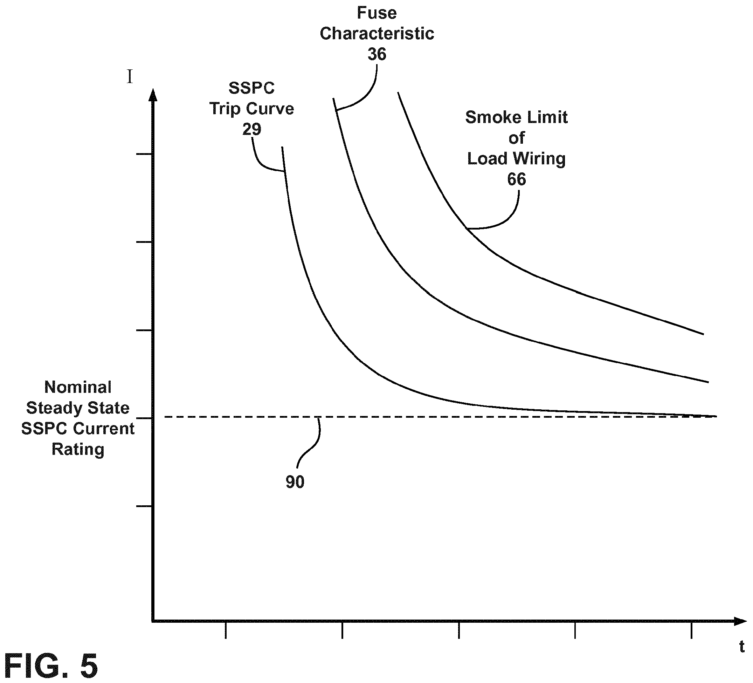

Continuing with FIG. 3, in various aspects of the present disclosure, the fuse 30 can have a current-time blow characteristic 36 (FIG. 5) chosen to be above a trip protection curve 29 (FIG. 5) of the SSPC 20 providing over-current protection for the load 60 or load wiring 62. The trip protection limit of the SSPC 20 can be set above a nominal operating point for the load current 64 such that the SSPC 20 remains closed (ON) as long as the load current 64 is flowing at a safe and normal level. When the load current 64 exceeds the trip protection limit, the SSPC can open the series switch 40 to cut power to the load wiring 62 before the load current 64 reaches a smoke limit curve 66 of the load wiring 62. The SSPC 20 can then be manually or automatically reset to a closed position (ON) once the overcurrent event has passed, allowing a resumed operation of the SSPC without repair. By positioning the current-time blow characteristic 36 of the fuse 30 to be above the trip protection curve 29, the fuse 30 remains intact when there is not a catastrophic failure of SSPC 20.

The trip protection curve 29 can follow an I²t (or similar current-time) wire protection function common in an electromechanical circuit breaker, where the curve follows an I²R (current squared) resistive heating characteristic of a conductor. Alternately, the trip protection curve 29 can follow a linear current-time function, or follow a step function controlled by the control circuit instead of being a continuous curve. The trip protection

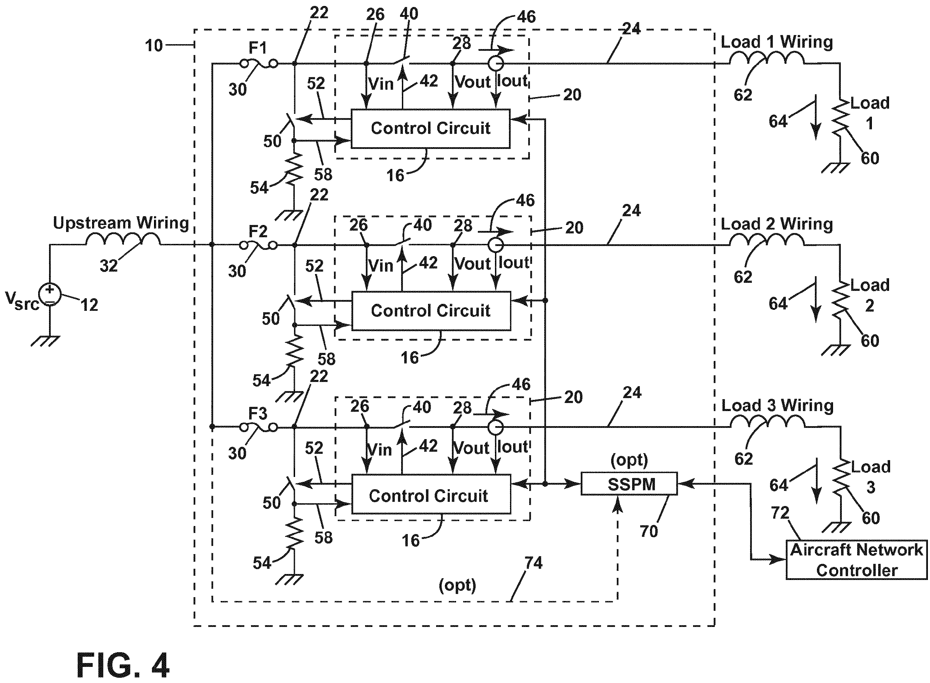

Referring now to FIG. 4, according to the invention, the distribution unit 10 can further include a current sense resistance 54 in series with the shunt switch 50 and can be monitored by the control circuit 16 through a shunt sense line 58 during a momentary closure of the shunt switch 50. The current sense resistance 54 can be a separate resistor in series with the shunt switch 50, or can be an internal resistance of the shunt switch 50. The blow command line 52 can close the shunt switch 50 momentarily in order to draw a current through fuse 30 without blowing the fuse 30. By developing a voltage at the shunt sense line 58, it can be verified that the fuse has not been blown and the shunt switch 50 is available for actuation should the SSPC 20 fail. In this way, the current sense resistance 54 can provide an auto-test function for the secondary protection system of the present disclosure.

The current sense resistance 54 can be located on a high or a low voltage side of the shunt switch 50. The size of the resistance 54 can be set small enough to not extend a blow time of the fuse 30 should a catastrophic failure occur. Yet, the resistance 54 can be set large enough to acquire an easily detectable voltage rise when the shunt switch 50 is momentarily closed for testing that the protection system is intact. Additionally, in an embodiment not shown, a source sense line 74 can connect the source 12 to the solid state power manager (SSPM) 70 in order to sense the presence or non-presence of a source voltage and distinguish its absence from a blown fuse 30. The source sense line 74 can also be measured by the control circuit 16 or by the aircraft network controller 72.

Referring now again to FIG. 5, in an aspect of the disclosure according to the invention, a plot of current on the Y-axis versus time on the X-axis shows a relationship between the current-time characteristics of the SSPC trip protection curve 29, the fuse characteristic 36, and the smoke limit 66 of the load wiring. As the load current increases beyond a nominal steady-state SSPC current rating 90, the length of time it takes for the SSPC to trip can gradually decrease. Beneficially, positioning the fuse characteristic 36 of the disclosed protection system between the SSPC trip curve 29 and the smoke limit curve 66 allows the improved distribution unit 10 to provide secondary protection of the load wiring in the event of an SSPC failure without impeding the overcurrent protection function of the SSPC 20. The protection system can be integrated into a distribution unit 10 or can be an external module adapted to interface with the input 22, the output 24, and the control circuit 16 of the SSPC 20.

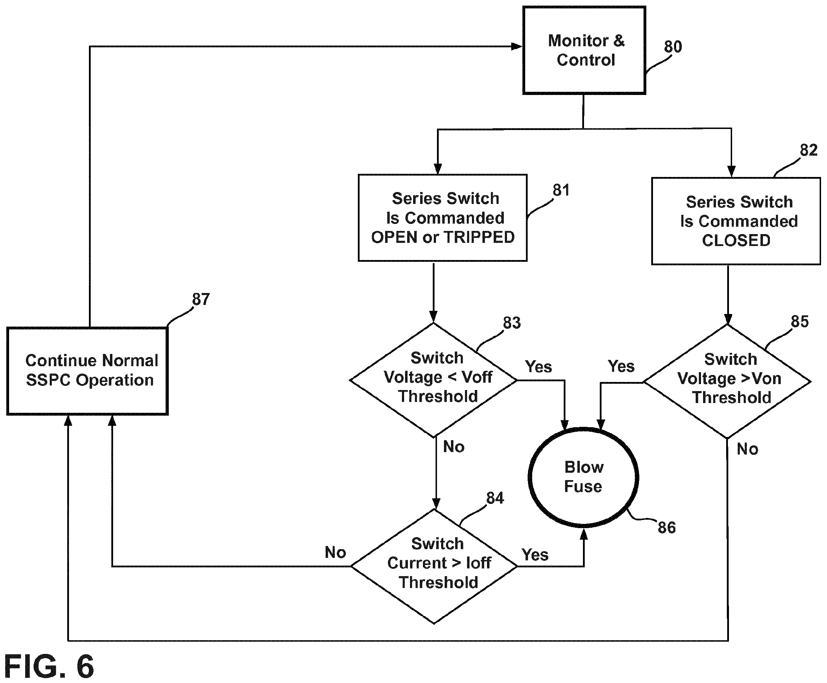

Referring now to FIG. 6, in an aspect of the disclosure according to the invention, a protection logic of the improved distribution unit 10 is presented. Monitor and control step 80 can be performed by the control circuit 16, the SSPM 70, or by an external circuit monitoring one or more operating parameters, including operating parameters of the SSPC such as the input voltage, the output voltage, and the switch current. For example, the control circuit 16 can command the SSPC to be open (step 81) or closed (step 82). The operating parameters can be monitored continuously or periodically for detecting a catastrophic failure warranting the blowing of fuse 30 (step 86), such as monitoring the switch voltage (steps 83 and 85) or monitoring the switch current (step 84). In the event the failure threshold has been exceeded (YES), the shunt switch 50 can be closed to cause the fuse 30 to blow and open the circuit between source 12 and the input 22. If there is no failure (NO), normal operation can continue (step 87), as can the monitoring step 80.

In other aspects not shown, the distribution unit 10 can contain a power converter or a voltage converter to convert a source voltage to an output voltage different than the source voltage, such as converting 270 VDC to 28 VDC, where the series switch 40 can be positioned to switch the source voltage or the output voltage.

Many other possible embodiments and configurations in addition to those shown in the above figures are contemplated by the present disclosure. To the extent not already described, the different features and structures of the various embodiments can be used in combination with each other as desired. That one feature cannot be illustrated in all of the embodiments is not meant to be construed that it cannot be, but is done for brevity of description. Thus, the various features of the different embodiments can be mixed and matched as desired to form new embodiments, whether or not the new embodiments are expressly described. Moreover, while "a set of" or "a plurality of" various elements have been described, it will be understood that "a set" or "a plurality" can include any number of the respective elements, including only one element. Combinations or permutations of features described herein are covered by this disclosure.

This written description uses examples to disclose embodiments of the disclosure, including the best mode, and also to enable any person skilled in the art to practice embodiments of the disclosure, including making and using any devices or systems and performing any incorporated methods. The patentable scope of the disclosure is defined by the claims.

## Claims

1. A solid state electrical power distribution system (10) for distributing electricity from a source (12) of electricity to a load (60) by way of at least one solid state power controller (SSPC) (20) having an input (22) coupled to the source (12) and an output (24) coupled to the load (60), **characterized by**:
a protection system for the at least one solid state power controller (SSPC) (20), the protection system comprising:
an open shunt switch (50) connecting the input (22) to ground (18);
a control circuit (16) coupled to the shunt switch (50) and configured to detect a failure in the SSPC (20), wherein a failure comprises failure of a solid state switch (40) of the SSPC (20) in a closed or partially closed state;
a current sense resistance (54) in series with the shunt switch (50) and monitored by the control circuit (16) during a momentary closure of the shunt switch (50);
a fuse (30) connected between the source (12) and the input (22); and
wherein upon detecting a failure in the SSPC (20), the control circuit (16) closes the shunt switch (50) to cause a short circuit that will blow the fuse (30) and isolate the SSPC (20) from the source (12),
wherein the SSPC (20) comprises the open shunt switch (50), and
wherein the SSPC (20) utilizes a solid state switch (40) connecting the input (22) to the output (24) and coupled to the control circuit (16).

2. The power distribution system of claim 1, wherein when the solid state switch (40) is commanded to be open the failure is one of a switch voltage between the input (22) and the output (24) being less than an input voltage (26) of the input (22) or a switch current (46) between the input (22) and the output (24) being greater than zero.

3. The power distribution system of claim 1 or 2, wherein the fuse (30) has a current-time blow characteristic (36) chosen to be above a trip protection curve (29) of the SSPC (20) providing over-current protection for the load (60).

4. The power distribution system of any of claims 1 to 3, wherein the fuse (30) has a current-time blow characteristic (36) chosen to be below a smoke or damage limit curve (66) of the load (60).

5. The power distribution system of any of claims 1 to 4, further including multiple SSPCs (20) each having an independent load (60) and an independent fuse (30).

6. A method of galvanically isolating an input (22) of at least one solid state power controller (SSPC) (20) from a source (12) in the event of a failure in a solid state electrical power distribution unit (10) distributing electricity from the source (12) to a load (60) of the SSPC (20), the method **characterized by**:
providing a normally open shunt switch (50) in the SSPC (20) connecting the input (22) to ground (18);
continuously checking the SSPC (20) for a failure, wherein a failure comprises failure of a solid state switch (40) of the SSPC (20) in a closed or partially closed state; and
closing the shunt switch (50) causing a short circuit and blowing a fuse (30) connecting the source (12) to the input (22) when a failure is detected,
wherein the method further comprises the SSPC (20) utilizing the solid state switch (40) to connect the input (22) to the load (60) and coupling the solid state switch (40) to a control circuit (16) controlling the shunt switch (50), and
wherein the method further comprises momentarily closing the shunt switch (50) and sensing a voltage across a current sense resistance (54) in series with the shunt switch (50) for testing the shunt switch (50).

7. The method of claim 6, wherein when the solid state switch (40) is commanded to be open the failure is one of a switch voltage between the input (22) and the load (60) being less than an input voltage (26) of the input (22) or a switch current (46) between the load (60) and the input (22) being greater than zero.

8. The method of claim 6 or 7, further comprising positioning a current-time blow characteristic of the fuse above a trip protection curve of the SSPC providing over-current protection of the load.

9. The method of any of claims 6 to 8, further comprising positioning a current-time blow characteristic of the fuse below a smoke limit curve of the load.

## Patentansprüche

1. Elektrisches Halbleiter-Energieverteilungssystem (10) zum Verteilen von Strom aus einer Stromquelle (12) an einen Verbraucher (60) über mindestens einen Halbleiter-Leistungsregler (SSPC) (20), der einen Eingang (22), der mit der Quelle (12) gekoppelt ist, und einen Ausgang (24), der mit dem Verbraucher (60) gekoppelt ist, aufweist, **gekennzeichnet durch**:
ein Schutzsystem für den mindestens einen Halbleiter-Leistungsregler (SSPC) (20), wobei das Schutzsystem umfasst:
einen offenen Umgehungsschalter (50), der den Eingang (22) mit Masse (18) verbindet;
eine Steuerschaltung (16), die mit dem Umgehungsschalter (50) gekoppelt ist und dazu konfiguriert ist, einen Defekt in dem SSPC (20) zu erkennen, wobei ein Defekt einen Defekt eines Halbleiterschalters (40) des SSPCs (20) in einem geschlossenen oder teilweise geschlossenen Zustand umfasst;
einen Strommesswiderstand (54), der mit dem Umgehungsschalter (50) in Reihe geschaltet ist und von der Steuerschaltung (16) während eines vorübergehenden Schließens des Umgehungsschalters (50) überwacht wird;
eine Sicherung (30), die zwischen der Quelle (12) und dem Eingang (22) angeschlossen ist; und
wobei bei dem Erkennen eines Defekts in dem SSPC (20) die Steuerschaltung (16) den Umgehungsschalter (50) schließt, um einen Kurzschluss hervorzurufen, der die Sicherung (30) auslöst und den SSPC (20) von der Quelle (12) trennt,
wobei der SSPC (20) den offenen Umgehungsschalter (50) umfasst, und
wobei der SSPC (20) einen Halbleiterschalter (40) verwendet, der den Eingang (22) mit dem Ausgang (24) verbindet und der mit der Steuerschaltung (16) gekoppelt ist.

2. Energieverteilungssystem nach Anspruch 1, wobei, wenn der Halbleiterschalter (40) betätigt wird, um offen zu sein, der Defekt einer davon ist, dass eine Schaltspannung zwischen dem Eingang (22) und dem Ausgang (24) niedriger als eine Eingangsspannung (26) des Eingangs (22) ist, oder dass ein Schaltstrom (46) zwischen dem Eingang (22) und dem Ausgang (24) größer als null ist.

3. Energieverteilungssystem nach Anspruch 1 oder 2, wobei die Sicherung (30) eine Strom-Zeit-Auslösecharakteristik (36) aufweist, die dazu gewählt wird, oberhalb einer Auslöseschutzkennlinie (29) des SSPCs (20) zu liegen, der Schutz gegen Überlaststrom für den Verbraucher (60) bereitstellt.

4. Energieverteilungssystem nach einem der Ansprüche 1 bis 3, wobei die Sicherung (30) eine Strom-Zeit-Auslösecharakteristik (36) aufweist, die dazu gewählt wird, unterhalb einer Rauch- oder Schadensgrenzkennlinie (66) des Verbrauchers (60) zu liegen.

5. Energieverteilungssystem nach einem der Ansprüche 1 bis 4, ferner umfassend mehrere SSPCs (20), die jeweils einen unabhängigen Verbraucher (60) und eine unabhängige Sicherung (30) aufweisen.

6. Verfahren zum galvanischen Trennen eines Eingangs (22) mindestens eines Halbleiter-Leistungsreglers (SSPC) (20) von einer Quelle (12) im Fall eines Defekts in einer elektrischen Halbleiter-Energieverteilungseinheit (10), die Strom aus der Quelle (12) an einen Verbraucher (60) des SSPCs (20) verteilt, wobei das Verfahren **gekennzeichnet ist durch**:
Bereitstellen eines normalerweise offenen Umgehungsschalters (50) in dem SSPC (20) der den Eingang (22) mit Masse (18) verbindet;
kontinuierliches Überprüfen des SSPCs (20) auf einen Defekt, wobei ein Defekt einen Defekt eines Halbleiterschalters (40) des SSPCs (20) in einem geschlossenen oder teilweise geschlossenen Zustand umfasst; und
Schließen des Umgehungsschalters (50), wodurch ein Kurzschluss hervorgerufen und eine Sicherung (30), welche die Quelle (12) mit dem Eingang (22) verbindet, ausgelöst wird, wenn ein Defekt erkannt wird,
wobei der Vorgang ferner umfasst, dass der SSPC (20) den Halbleiterschalter (40) dazu verwendet, den Eingang (22) mit dem Verbraucher (60) zu verbinden, und den Halbleiterschalter (40) mit einer Steuerschaltung (16) koppelt, die den Umgehungsschalter (50) steuert, und
wobei das Verfahren ferner das vorübergehende Schließen des Umgehungsschalters (50) und das Messen einer Spannung über einen Strommesswiderstand (54), der mit dem Umgehungsschalter (50) in Reihe geschaltet ist, um den Umgehungsschalter (50) zu testen, umfasst.

7. Verfahren nach Anspruch 6, wobei, wenn der Halbleiterschalter (40) dazu betätigt wird, offen zu sein, der Defekt einer davon ist, dass eine Schaltspannung zwischen dem Eingang (22) und dem Verbraucher (60) geringer als eine Eingangsspannung (26) des Eingangs (22) ist, oder ein Schaltstrom (46) zwischen dem Verbraucher (60) und dem Eingang (22) größer als null ist.

8. Verfahren nach Anspruch 6 oder 7, ferner umfassend das Positionieren einer Strom-Zeit-Auslösecharakteristik der Sicherung oberhalb einer Auslöseschutzkennlinie des SSPCs, der den Überlaststromschutz des Verbrauchers bereitstellt.

9. Verfahren nach einem der Ansprüche 6 bis 8, ferner umfassend das Positionieren einer Strom-Zeit-Auslösecharakteristik der Sicherung unterhalb einer Rauchgrenzkennlinie des Verbrauchers.

## Revendications

1. Système de distribution d'énergie électrique à semi-conducteurs (10) pour distribuer de l'électricité à partir d'une source (12) d'électricité à une charge (60) par le biais d'au moins un régulateur d'énergie à semi-conducteurs (SSPC) (20) présentant une entrée (22) couplée à la source (12) et une sortie (24) couplée à la charge (60), **caractérisé par** :
un système de protection pour ledit au moins un régulateur d'énergie à semi-conducteurs (SSPC) (20), le système de protection comprenant :
un commutateur de shunt ouvert (50) reliant l'entrée (22) à la terre (18) ;
un circuit de commande (16) couplé au commutateur de shunt (50) et configuré pour détecter un défaut dans le SSPC (20), dans lequel un défaut comprend un défaut d'un commutateur à semi-conducteurs (40) du SSPC (20) dans un état fermé ou partiellement fermé ;
une résistance de détection de courant (54) connectée en série avec le commutateur de shunt (50) et surveillée par le circuit de commande (16) pendant une fermeture momentanée du commutateur de shunt (50) ;
un fusible (30) connecté entre la source (12) et l'entrée (22) ; et
dans lequel, lors de la détection d'un défaut dans le SSPC (20), le circuit de commande (16) ferme le commutateur de shunt (50) pour provoquer un court-circuit qui fera sauter le fusible (30) et séparera le SSPC (20) de la source (12),
dans lequel le SSPC (20) comprend le commutateur de shunt ouvert (50), et
dans lequel le SSPC (20) utilise un commutateur à semi-conducteurs (40) reliant l'entrée (22) à la sortie (24) et couplé au circuit de commande (16).

2. Système de distribution d'énergie selon la revendication 1, dans lequel, lorsque le commutateur à semi-conducteurs (40) est commandé pour être ouvert, le défaut est soit le fait qu'une tension de commutation entre l'entrée (22) et la sortie (24) est inférieure à une tension d'entrée (26) de l'entrée (22), soit le fait qu'un courant de commutation (46) entre l'entrée (22) et la sortie (24) est supérieur à zéro.

3. Système de distribution d'énergie selon la revendication 1 ou 2, dans lequel le fusible (30) présente une caractéristique de déclenchement courant-temps (36) choisie pour se situer au-dessus d'une courbe de protection de déclenchement (29) du SSPC (20) fournissant une protection contre les surintensités de courant pour la charge (60).

4. Système de distribution d'énergie selon l'une quelconque des revendications 1 à 3, dans lequel le fusible (30) présente une caractéristique de déclenchement courant-temps (36) choisie pour se situer au-dessous d'une courbe de limite de fumée ou de dégât (66) de la charge (60).

5. Système de distribution d'énergie selon l'une quelconque des revendications 1 à 4, comprenant en outre plusieurs SSPC (20) présentant chacun une charge indépendante (60) et un fusible indépendant (30).

6. Procédé permettant l'isolation galvanique d'une entrée (22) d'au moins un régulateur d'énergie à semi-conducteurs (SSPC) (20) par rapport à une source (12) dans le cas d'un défaut dans une unité de distribution d'énergie électrique à semi-conducteurs (10) distribuant de l'électricité à partir de la source (12) à une charge (60) du SSPC (20), le procédé étant **caractérisé par** les étapes consistant à :
fournir un commutateur de shunt normalement ouvert (50) dans le SSPC (20) reliant l'entrée (22) à la terre (18) ;
vérifier en continu le SSPC (20) quant à un défaut, dans lequel un défaut comprend un défaut d'un commutateur à semi-conducteurs (40) du SSPC (20) dans un état fermé ou partiellement fermé ; et
fermer le commutateur de shunt (50) en provoquant un court-circuit et faisant sauter un fusible (30) qui relie la source (12) à l'entrée (22) lorsqu'un défaut est détecté,
dans lequel le procédé comprend le fait que le SSPC (20) utilise le commutateur à semi-conducteurs (40) pour relier l'entrée (22) à la charge (60) et couple le commutateur à semi-conducteurs (40) à un circuit de commande (16) commandant le commutateur de shunt (50), et
dans lequel le procédé comprend en outre la fermeture momentanée du commutateur de shunt (50) et la détection d'une tension aux bornes d'une résistance de détection de courant (54) connectée en série avec le commutateur de shunt (50) pour tester le commutateur de shunt (50).

7. Procédé selon la revendication 6, dans lequel, lorsque le commutateur à semi-conducteurs (40) est commandé pour être ouvert, le défaut est soit le fait qu'une tension de commutation entre l'entrée (22) et la charge (60) est inférieure à une tension d'entrée (26) de l'entrée (22), soit qu'un courant de commutation (46) entre la charge (60) et l'entrée (22) est supérieur à zéro.

8. Procédé selon la revendication 6 ou 7, comprenant en outre le positionnement d'une caractéristique de fusion courant-temps du fusible au-dessus d'une courbe de protection de déclenchement du SSPC fournissant une protection contre les surintensités de courant de la charge.

9. Procédé selon l'une quelconque des revendications 6 à 8, comprenant en outre le positionnement d'une caractéristique de fusion courant-temps du fusible au-dessous d'une courbe de limite de fumée de la charge.
